# EUROPÄISCHE PATENTANMELDUNG

(11) **EP 1 840 143 A1**
(43) Veröffentlichungstag der Anmeldung: **03.10.2007**
(21) Anmeldenummer: 06111932.7
(22) Anmeldetag: 29.03.2006
(51) Int. Cl.: C08G 18/08, C08G 18/79, C09J 175/04, C09J 5/06, C08J 5/12

(54) **Wässriger einkomponentiger Dispersionsprimer für das Verkleben von Kunststofffolien mittels Dispersionsklebstoffen**

(71) Anmelder: Sika Technology AG, 6340 Baar (CH)
(72) Erfinder: Demmig, Martin, 21037, Hamburg (DE); Buchholz, Andre, 27721, Ritterhude (DE); Kühnemund, Peter, 25727, Frestedt (DE)

(57) **Zusammenfassung**

Die vorliegende Erfindung betrifft die Verwendung einer einkomponentigen wässrigen Polyurethandispersionszusammensetzung (**PD**) als Primer für das Verkleben von Kunststofffolien (**KF**) mittels eines wässrigen einkomponentigen Polyurethandispersionsklebstoffes **(DK),** wobei die wässrige Polyurethandispersionszusammensetzung **(PD)** ein Polyurethan **P1** sowie Carbodiimidgruppen und/oder Carboxylgruppen aufweist und wobei der Polyurethandispersionsklebstoff **(DK)** ein Polyurethan **P2** sowie Carbodiimidgruppen und/oder Carboxylgruppen aufweist, so dass die wässrige Polyurethandispersionszusammensetzung (**PD**) und der wässrige Polyurethandispersionsklebstoff (**DK**) beim Erhitzen auf eine Temperatur von 50°C oder mehr miteinander über eine Polyadditionsreaktion reagieren.

Weiterhin betrifft die Erfindung Primer-beschichtete Kunststofffolien, daraus hergestellte Verbundkörper sowie die Verfahren zu deren Herstellung.

## Beschreibung

### Technisches Gebiet

Die Erfindung betrifft das Gebiet wässriger Dispersionsprimerzusammensetzungen und das Verkleben von Kunststofffolien mittels Dispersionsklebstoffen.

### Stand der Technik

Wässrige Dispersionsklebstoffe werden breit, insbesondere für das Verkleben von Textilien eingesetzt.

Für das Verkleben von Folien, insbesondere von Dekorfolien, mit Dispersionsklebstoffen werden die Folien üblicherweise mit einem Primer vorbehandelt. Diese Primer basieren in der Regel auf Lösungsmittel und sind deshalb aus der arbeitshygienischen und sicherheitstechnischen Gründen nachteilig. Es sind auch wässrige Polyurethan-Primer bekannt, welche Sulfonatgruppen aufweisen. Diese Primer weisen jedoch Schwächen auf bei Klima- und Wärmebelastungen und führen deshalb vielfach vorzeitig zum Versagen der Verklebung.

Bei den wässrigen Dispersionsklebstoffen lässt sich in letzter Zeit ein Trend hin zu einkomponentigen wässrigen Dispersionsklebstoffen feststellen. So offenbart WO 2005/113627 A1 wässrige einkomponentige Dispersionsklebstoffe, welche auf einem Polyurethan mit Carboxylgruppen und Carbodiimidgruppen oder einem Polyurethan mit Carboxylgruppen und einem Carbodiimid basieren.

Es hat sich jedoch gezeigt, dass auch für diese einkomponentigen Dispersionsklebstoffe die Verwendung von Primern von Vorteil ist. Allerdings zeigen die bekannten Primersysteme die oben erwähnten Schwächen.

### Darstellung der Erfindung

Die Aufgabe der vorliegenden Erfindung ist es daher, die Probleme des Standes der Technik zu beheben und insbesondere ein Verfahren zum verlässlichen Verkleben von Kunststofffolien mittels wässrigen einkomponentigen Dispersionsklebstoffen zur Verfügung zu stellen.

Überraschenderweise wurde gefunden, dass diese Aufgabe unter einer Verwendung einer wässrigen Polyurethandispersionszusammensetzung als Primer gemäss Anspruch 1 gelöst werden kann.

Ein weiterer Aspekt der vorliegenden Erfindung ist eine Primer-beschichtete Kunststofffolie gemäss Anspruch 8. Es zeigte sich, dass eine derartige beschichtete Folie klebfrei ist, und ohne Trennpapier-Zwischenlagen aufgerollt werden kann und zu keinen Verklebungen der einzelnen Lagen führt und somit als "nicht blockend" bezeichnet werden kann.

Weitere Aspekte der Erfindung stellen Verbundkörper gemäss Anspruch 10 dar sowie Verfahren zu deren Herstellung gemäss Anspruch 12.

Weitere vorteilhafte Ausgestaltungen der Erfindung ergeben sich aus den Unteransprüchen. Es zeigt sich, dass mit der vorliegenden Erfindungen Verbundkörper, insbesondere mit Folien verklebte Kunststoffe und Faserwerkstoffe, erhalten werden können, welche ein verbesserte Klima- und Temperaturbelastungsverhalten aufweisen.

### Wege zur Ausführung der Erfindung

Die vorliegende Erfindung betrifft einerseits die Verwendung einer einkomponentigen wässrigen Polyurethandispersionszusammensetzung **(PD)** als Primer für das Verkleben von Kunststofffolien **(KF)** mittels eines wässrigen einkomponentigen Polyurethandispersionsklebstoffes **(DK).**

Die wässrige Polyurethandispersionszusammensetzung **(PD)** weist hierbei ein Polyurethan **P1** sowie Carbodiimidgruppen und/oder Carboxylgruppen und der Polyurethandispersionsklebstoff **(DK)** weist ein Polyurethan **P2** sowie Carbodiimidgruppen und/oder Carboxylgruppen auf, so dass die wässrige Polyurethandispersionszusammensetzung **(PD)** und der wässrige Polyurethandispersionsklebstoff **(DK)** bei Erhitzen auf eine Temperatur von 50°C oder mehr miteinander über eine Polyadditionsreaktion reagieren.

Die Carbodiimidgruppen reagieren mit Carboxylgruppen unter dem Einfluss von Wärme.

Somit sind folgende unterschiedliche Varianten möglich:
a) die wässrige Polyurethandispersionszusammensetzung **(PD)** enthält Carbodiimidgruppen und der wässrige Polyurethandispersionsklebstoff **(DK)** enthält Carboxylgruppen
b) die wässrige Polyurethandispersionszusammensetzung **(PD)** enthält Carboxylgruppen und der wässrige Polyurethandispersionsklebstoff **(DK)** enthält Carbodiimidgruppen.
c) die wässrige Polyurethandispersionszusammensetzung **(PD)** enthält Carbodiimidgruppen und Carboxylgruppen und der wässrige Polyurethandispersionsklebstoff **(DK)** enthält Carboxylgruppen
d) die wässrige Polyurethandispersionszusammensetzung **(PD)** enthält Carbodiimidgruppen und Carboxylgruppen und der wässrige Polyurethandispersionsklebstoff **(DK)** enthält Carbodiimidgruppen
e) die wässrige Polyurethandispersionszusammensetzung **(PD)** enthält Carbodiimidgruppen und der wässrige Polyurethandispersionsklebstoff **(DK)** enthält Carbodiimidgruppen und Carboxylgruppen
f) die wässrige Polyurethandispersionszusammensetzung **(PD)** enthält Carboxylgruppen und der wässrige Polyurethandispersionsklebstoff **(DK)** enthält Carbodiimidgruppen und Carboxylgruppen
g) die wässrige Polyurethandispersionszusammensetzung **(PD)** enthält Carboxylgruppen und Carbodiimidgruppen und der wässrige Polyurethandispersionsklebstoff **(DK)** enthält Carbodiimidgruppen und Carboxylgruppen

Um eine Polyadditionsreaktion der wässrigen Polyurethandispersionszusammensetzung **(PD)** mit dem wässrigen Polyurethandispersionsklebstoff **(DK)** bei Erhitzen auf eine Temperatur von 50°C oder mehr miteinander zu gewährleisten, ist bei den Möglichkeiten c), d), e) und f), d.h. dort, wo in der Polyurethandispersionszusammensetzung **(PD)** und/oder im wässrigen Polyurethandispersionsklebstoff **(DK)** Carbodiimidgruppen und gleichzeitig Carboxylgruppen vorhanden sind, darauf zu achten, dass jeweils diejenige dieser funktionellen Gruppe, welche nur in der Polyurethandispersionszusammensetzung **(PD)** oder nur im wässrigen Polyurethandispersionsklebstoff **(DK)** vorhanden sind, in einem stöchiometrischen Überschuss gegenüber der anderen funktionellen Gruppe in der Polyurethandispersionszusammensetzung **(PD)** und/oder im Polyurethandispersionsklebstoff **(DK),** wo sowohl Carbodiimidgruppen als auch Carboxylgruppen vorhanden sind, vorhanden sind.

Somit sind in
c) in der Polyurethandispersionszusammensetzung **(PD)** die Carbodiimidgruppen im stöchiometrischen Überschuss gegenüber den Carboxylgruppen;
d) in der Polyurethandispersionszusammensetzung **(PD)** die Carboxylgruppen im stöchiometrischen Überschuss gegenüber den Carbodiimidgruppen;
e) im Polyurethandispersionsklebstoff **(DK)** die Carboxylgruppen im stöchiometrischen Überschuss gegenüber den Carbodiimidgruppen;
f) im Polyurethandispersionsklebstoff **(DK)** die Carbodiimidgruppen im stöchiometrischen Überschuss gegenüber den Carboxylgruppen;

Bei der Möglichkeit g) muss jeweils die eine der funktionellen Gruppe (Carbodiimidgruppen bzw. Carboxylgruppen) in der Polyurethandispersionszusammensetzung **(PD)** im stöchiometrischen Überschuss vorhanden sein, während im Polyurethandispersionsklebstoff **(DK)** diese funktionelle Gruppe im stöchiometrischen Unterschuss vorhanden ist.

Die Carboxylgruppen sind bevorzugt an das Polyurethan **P1** und/oder an das Polyurethan **P2** gebunden.

Die Carbodiimidgruppen sind bevorzugt in das Polyurethan **P1** und/oder in das Polyurethan **P2** eingebunden.

Die bevorzugte Carbodiimidgruppe weist die Formel (I) auf

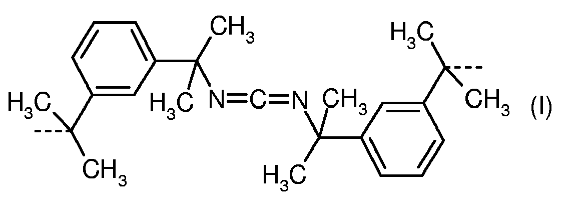

Die Carboxylgruppen sind in das Polyurethan **P1** und/oder Polyurethan **P2** gebunden.

In einer bevorzugten Ausführungsform weist die wässrige Polyurethandispersionszusammensetzung **(PD)** Carbodiimidgruppen auf, welche in ein Polyurethan **P1** eingebunden sind.

In einer anderen bevorzugten Ausführungsform weist die wässrige Polyurethandispersionszusammensetzung **(PD)** Carboxylgruppen auf, welche ans Polyurethan **P1** gebunden sind.

Das Polyurethan **P2,** welches sich im wässrigen Polyurethandispersionsklebstoff **(DK)** befindet, ist einerseits bevorzugt ein Polyurethan **(PUR-COOH-CDI),** welches sowohl Carbodiimidgruppen als auch Carboxylgruppen aufweist.

Das Polyurethan **P2,** welches im wässrigen Polyurethandispersionsklebstoff **(DK)** ist andererseits bevorzugt ein Polyurethan **(PUR-COOH),** welches Carboxylgruppen aufweist. Es ist bevorzugt, dass der Dispersionsklebstoff **(DK)** ein derartiges Polyurethan **(PUR-COOH)** und weiterhin mindestens ein Carbodiimid **(CDI),** welches mindestens eine Carbodiimidgruppe aufweist, umfasst.

Derartige Carbodiimide **(CDI)** sind Verbindungen die mindestens eine Carbodiimid-Gruppe -N=C=N- aber keine Carboxylgruppen enthalten. Besonders geeignete Carbodiimide **(CDI)** sind solche die das Strukturelement der Formel (I) aufweisen,

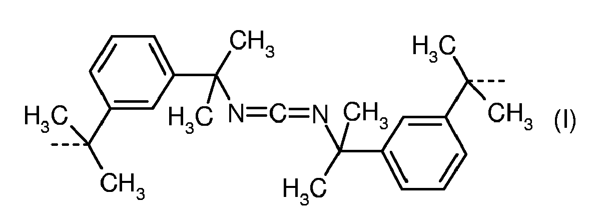

Besonders geeignete derartige Carbodiimide **(CDI)** sind beispielsweise als "Carbodiimide Ibii" in WO 00/11060 beschrieben.

In einer weiteren Ausführungsform enthält die Polyurethandispersionszusammensetzung **(PD)** mindestens ein Carbodiimid **(CDI),** welches mindestens eine Carbodiimidgruppe aufweist, wie es oben beschrieben wurde.

In einer der meist bevorzugten Ausführungsform umfasst die wässrige Polyurethandispersionszusammensetzung **(PD)** als Polyurethanpolymer **P1** ein Carboxylgruppen aufweisendes Polyurethanpolymer **(PUR-COOH)** und der wässrige Polyurethandispersionsklebstoff **(DK)** als Polyurethanpolymer **P2** ein Carbodiimidgruppen aufweisendes Polyurethanpolymer **(PUR-CDI)** oder ein sowohl Carbodiimidgruppen als auch Carboxylgruppen aufweisendes Polyurethanpolymer **(PUR-COOH-CDI),** wobei in letzterem Fall die Carbodiimid-gruppen im Polyurethanpolymer **(PUR-COOH-CDI)** im stöchiometrischen Überschuss gegenüber den Carboxylgruppen vorliegen.

Das Polyurethanpolymer **P1** und das Polyurethanpolymer **P2** weisen bevorzugt keine Sulfonatgruppen auf.

Die Polyurethanpolymere **P1** und **P2** werden in dem Fachmann für wässrige Dispersionen bekannter Art und Weise hergestellt, typischerweise aus Polyisocyanaten und NCO-aktiven Verbindungen wie Polyolen.

Polyurethane mit Carboxylgruppen **PUR-COOH** sind Polyurethane, die mindestens eine Carboxylgruppen pro Makromolekül, aufweisen. Solche Verbindungen sind seit langem bekannt und werden in der Formulierung von wässrigen Polyurethan-Dispersionen eingesetzt. Typischerweise werden diese aus Polyisocyanaten und Carboxylgruppen- und NCO-aktive-Gruppen-aufweisende Verbindungen und gegebenenfalls üblichen Polyolen, insbesondere Diole hergestellt. Solche Carboxylgruppen- und NCO-aktive-Gruppen-aufweisende Verbindungen sind beispielsweise Aminocarbonsäuren, Hydroxycarbonsäuren, insbesondere Dihydroxyalkylcarbonsäuren, wie beispielsweise Dimethylolpropionsäure oder dazu strukturähnliche Diol-carbonsäuren. Es hat sich gezeigt, dass sehr geeignete Polyurethane mit Carboxylgruppen **PUR-COOH** solche sind, wie sie beispielsweise als "Polymer (PII)" in DE 100 00 656 A1 oder WO 01/34559 A1 beschrieben sind.

Polyurethane mit Carboxylgruppen und Carbodiimidgruppen **PUR-COOH-CDI** sind Polyurethane, welche neben Carboxylgruppen auch noch Carbodiimidgruppen -N=C=N- enthalten.

Besonders geeignete Polyurethane mit Carboxylgruppen und Carbodiimidgruppen **PUR-COOH-CDI** sind solche die das Strukturelement der Formel (I) aufweisen.

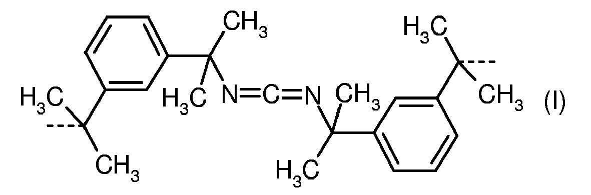

Solche Verbindungen sind beispielsweise in DE 100 01 777 A1 oder als "Polymere (la)" in EP 1 000 104 B1 beschrieben.

Unter gewissen Umständen hat es sich als vorteilhaft erwiesen, dass die Polyurethandispersionszusammensetzung **(PD)** und/oder der Dispersionsklebstoff **(DK)** gleichzeitig mindestens ein Carbodiimid **(CDI)** und mindestens ein Polyurethan mit Carboxylgruppen und Carbodiimidgruppen **(PUR-COOH-CDI)** enthält.

Ebenso kann es von Vorteil sein, dass der wässrige Dispersionsklebstoff gleichzeitig mindestens ein Polyurethan mit Carboxylgruppen und Carbodiimidgruppen **(PUR-COOH-CDI)** und mindestens ein Polyurethan mit Carboxylgruppen **(PUR-COOH)** enthält.

Die einkomponentige wässrige Polyurethandispersionszusammensetzung **(PD)** und der einkomponentigen Polyurethandispersionsklebstoff **(DK)** enthalten weiterhin Wasser. Typischerweise beträgt der Wasseranteil zwischen 70 Gew.-% und 40 Gew.-%, insbesondere zwischen 55 Gew.-% und 45 Gew.-%.

Die wässrige Polyurethandispersionszusammensetzung **(PD)** und insbesondere der einkomponentige Polyurethandispersionsklebstoff **(DK)** können weiterhin mindestens ein Copolymer **A** enthalten, welches entweder ein Ethylen/Vinylacetat-Copolymer (EVA) oder ein Copolymer aus den Monomeren Ethylen, Vinylacetat und mindestens einem (Meth)acrylat, ist.

Weiterhin weisen die einkomponentige wässrige Polyurethandispersionszusammensetzung **(PD)** und/oder der einkomponentige Polyurethandispersionsklebstoff **(DK)** vorteilhaft weitere Bestandteile auf. Als weitere Bestandteile sind insbesondere Bestandteile, welche ausgewählt sind aus der Gruppe umfassend Stabilisatoren, Verdickungsmittel, Alterungsschutzmittel, Fungizide, Pigmente, Farbstoffe, Netzmittel, Antischaummittel, Mattierungsmittel, Neutralisationsmittel und Füllstoffe.

Grundsätzlich sind solche Stabilisatoren, wie sie bei wässrigen Dispersionen üblicherweise verwendet werden, geeignet. Es hat sich jedoch gezeigt, dass die Verwendung von Stabilisatoren zu sehr lagerstabilen Dispersionsklebstoffen und Polyurethandispersionszusammensetzungen führen, wenn der Stabilisator ausgewählt ist aus der Gruppe umfassend Netzmittel, Cellulose, Polyvinylalkohol, Polyvinylpyrrolidon sowie Mischungen davon.

Besonders vorteilhaft sind Dispersionsklebstoffe und Polyurethandispersionszusammensetzungen, welche frei von organischen Lösungsmitteln, insbesondere frei von sogenannten VOCs (Volatile Organic Compounds) und/oder Weichmachern sind. Sowohl Weichmacher als auch organische Lösungsmittel sind vom ökotoxikologischen und arbeitshygienischen Standpunkt aus nachteilig. Weiterhin können Weichmacher an die Oberfläche migrieren und zum Versagen einer Verklebung führen oder dazu führen, dass die Oberfläche klebrig wird, was zu Verschmutzungen der Klebfugen führt. Auch Lösungsmittel sind unerwünscht, da sie einerseits zusätzliches Gefahrenpotential beim Aufheizen und bei der Applikation des Klebstoffs mit sich bringen können und weil sie andererseits ebenfalls migrieren und über lange Zeit an die Umwelt und an Materialien, welche in Kontakt mit dem Klebstoff stehen, abgegeben werden können und diese negativ beeinflussen können, beziehungsweise zum Versagen der Verklebung führen können.

Die Herstellung der einkomponentigen wässrigen Polyurethandispersionszusammensetzung **(PD)** und/oder des einkomponentigen Polyurethandispersionsklebstoffes **(DK)** erfolgt in dem Fachmann für wässrige Dispersionen und Dispersionsklebstoffe bekannter Art und Weise, wie sie beispielsweise in WO 2005/113627 A1 offenbart wird.

Die einkomponentige wässrige Polyurethandispersionszusammensetzung **(PD)** wird als Primer für das Verkleben von Kunststofffolien **(KF)** mittels eines wässrigen einkomponentigen Polyurethandispersionsklebstoffes **(DK)** verwendet.

Der Term "Primer" wird in diesem Dokument wie in vom Fachmann üblicherweise verstandenen Bedeutung verwendet, nämlich dass hiermit eine dünne Schicht, von typischerweise dünner als 1 Millimeter, insbesondere zwischen 1 und 200 Mikrometer, bevorzugt zwischen 1 und 100 Mikrometer, verstanden, welche auf die Kunststofffolie **(KF)** appliziert wird und nach dem Ablüften mit einem Klebstoff kontaktiert wird und zur Verbesserung der Haftung des Klebstoffs auf der Kunststofffolie führt.

Unter "Ablüften" wird im gesamten Dokument ein Abtrocknen einer wässrigen Polyurethandispersionszusammensetzung oder eines wässrigen Polyurethandispersionsklebstoffes nach der Applikation desselben verstanden, wobei das Wasser ganz oder zumindest hauptsächlich, verdunstet. In diesem Dokument wird eine derartig abgelüftete wässrige Polyurethandispersionszusammensetzung, beziehungsweise ein wässriger Polyurethandispersionsklebstoff, durch **PD',** respektive **DK',** bezeichnet.

Als "Kunststofffolie" werden insbesondere biegsame flächige Kunststoffe in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Kunststofffolien **(KF)** werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein.

Der Kunststoff ist vorzugsweise ein thermoplastischer Kunststoff", wie PVC, insbesondere Weich-PVC, Ethylen/Vinylacetat-Copolymere (EVA), oder Thermoplastische Polyolefine (TPO), ASA(Acrylonitril/Styrol/Acrylsäureester), PUR (Polyurethan), PA (Polyamid), Poly(meth)acrylate, Polycarbonate, PET (Polyethylenterephtalat) oder deren Kunststofflegierungen. Als besonders bevorzugt gelten PVC und Thermoplastische Polyolefine (TPO).

Somit umfasst ein weiterer Aspekt der vorliegenden Erfindung eine Primer-beschichtete Kunststofffolie, welche erhalten wird durch das Applizieren und Ablüften einer einkomponentigen wässrigen Polyurethandispersionszusammensetzung **(PD),** welche mindestens ein Polyurethan **P1** sowie Carbodiimidgruppen und/oder Carboxylgruppen aufweist, auf eine Kunststofffolie **(KF).** Die einkomponentige wässrige Polyurethandispersionszusammensetzung **(PD)** und die Kunststofffolie **(KF)** wurden bereits beschrieben.

Die Herstellung der Primer-beschichteten Kunststofffolien kann unterschiedlich erfolgen. Der Auftrag der wässrigen Polyurethandispersionszusammensetzung **(PD)** kann beispielsweise durch ein Sprüh-, Streich-, Rakel-, Stempel-, Walz- oder Giessauftragsverfahren erfolgen. Beim Sprühauftrag des Klebstoffs - dieses Verfahren wird bevorzugt eingesetzt- ist jedoch das Problem des sogenannten Oversprays zu berücksichtigen. Der Auftrag wird üblicherweise mittels einer Auftragseinheit aufgetragen.

Nach dem Auftragen der wässrigen Polyurethandispersionszusammensetzung **(PD)** wird diese abgelüftet, wodurch eine abgelüftete wässrige Polyurethandispersionszusammensetzung **(PD')** gebildet wird, die einen Film bildet. Dieser Film wird als Primer bezeichnet. Das Ablüften kann durch Abdunsten an Luft mit und ohne Ablüftemittel erfolgen. Als Ablüftemittel kann beispielsweise ein Gebläse, insbesondere ein Luftgebläse, dienen. Bevorzugt wird ein Ablüftemittel eingesetzt. Das Ablüften kann bei Raumtemperatur oder bei erhöhter Temperatur erfolgen, insbesondere bei einer Temperatur unter 150°C. Das Ablüften erfolgt vorzugsweise bei niedriger Temperatur, zum Beispiel durch einen Carnot-Prozess.

Die derart hergestellte Primer-beschichtete Kunststofffolie kann nun je nach Bedarf abgelängt, abgeschnitten, aufgerollt oder direkt weiter verarbeitet werden. Die Rollen mit den Primer-beschichteten Kunststofffolien können nun je nach Bedarf gelagert oder transportiert werden. Es ist ein wesentlicher Vorteil der beschriebenen Primer-beschichteten Kunststofffolie, dass sie ohne die Verwendung von Trennpapier-Zwischenlagen aufgerollt werden kann, da kein Blocken der aufgerollten Folie auch nach längeren Lager- oder Transportzeiten auftritt. So kann beispielsweise die Primer-beschichtete Kunststofffolie beim Folienhersteller beschichtet werden, welche darauf hin über längere Zeit gelagert und zu demjenigen Werk geliefert werden kann, welches dann diese vorbeschichtete Folie mit einem Träger verklebt. Trotz dieser langen Zeitspanne zwischen Beschichtung und Verarbeitung ist ein tadelloser Klebverbund gewährleistbar. Dieser Vorteil ist insbesondere deshalb wichtig, weil in der Industrie, insbesondere der Fahrzeugherstellung ein Trend der Fertigung "weg vom Band hin zum Zulieferer" zu beobachten ist. Dieser Trend setzt sich seinerseits auch zwischen dem direkten Zulieferer -zum Beispiel von Autotüren- und dessen Zulieferer -zum Beispiel von Dekormateralien- fort. Es ist dem Fachmann klar, dass unter gewissen Bedingungen es trotzdem von Vorteil sein kann, Zwischenlagen eines Trennpapiers zu verwenden.

Die hergestellten Primer-beschichteten Kunststofffolien werden bevorzugt mittels eines wässrigen Dispersionsklebstoffes zu einem Verbundkörper verklebt.

Somit betrifft ein weiterer Aspekt der vorliegenden Erfindung einen Verbundkörper sowie ein Verfahren zu dessen Herstellung.

Der Verbundkörper wird durch ein Verfahren hergestellt, welches die folgenden Schritte umfasst
(i) Applizieren der wässrigen Polyurethandispersionszusammensetzung **(PD)** auf eine Kunststofffolie **(KF)**
(ii) Ablüften der Polyurethandispersionszusammensetzung **(PD)** unter Bildung einer abgelüfteten Polyurethandispersionszusammensetzung **(PD')**
(iii) Applizieren des wässrigen Polyurethandispersionsklebstoffes **(DK)** auf das Substrat **(S)**
(iv) Ablüften des wässrigen Polyurethandispersionsklebstoffes **(DK)** unter Bildung eines abgelüfteten Polyurethandispersionsklebstoffes **(DK')**
(v) Erwärmen der Kunststofffolie **(KF)** mit der darauf abgelüfteten Polyurethandispersionszusammensetzung **(PD')**
(vi) Kontaktieren des abgelüfteten Polyurethandispersionsklebstoffes **(DK')** mit der nach (ii) abgelüfteten Polyurethandispersionszusammensetzung **(PD').**

Die Schritte (iv) und (v) können hierbei nacheinander oder gleichzeitig erfolgen. Die wässrige Polyurethandispersionszusammensetzung **(PD)** und der wässrige Polyurethandispersionsklebstoff **(DK)** sind bereits vorgängig beschrieben worden.

Das Applizieren des wässrigen Polyurethandispersionsklebstoffs **(DK)** kann beispielsweise durch ein Sprüh-, Streich-, Rakel-, Stempel-, Walz- oder Giessauftragsverfahren erfolgen. Beim Sprühauftrag des Klebstoffs - dieses Verfahren wird bevorzugt eingesetzt- ist jedoch das Problem des sogenannten Oversprays zu berücksichtigten. Der Dispersionsklebstoff wird typischerweise in einer Menge von 30 bis 200 g/m² nass, bevorzugt 60 bis 120 g/m² nass auf die zu verklebende Oberfläche aufgetragen.

In einer bevorzugten Ausführungsform erfolgt der Schritt des Kontaktierens (vi) unter einem auf die Folie ausgeübten Anpressdruck. Dieser Anpressdruck beträgt vorzugsweise zwischen 0.1 bar und 1 bar, bevorzugt mindestens 0.8 bar. Dieser Anpressdruck wird vorzugsweise durch das Anlegen eines Unterdruckes zwischen Folie und Substrat erzeugt, vorzugsweise durch Absaugen von Luft aus dem Raum zwischen abgelüftetem Polyurethandispersionsklebstoffes **(DK')** und abgelüfteter Polyurethandispersionszusammensetzung **(PD')** erzeugt.

Vorzugsweise weist der abgelüftete Polyurethandispersionsklebstoff **(DK')** beim Kontaktieren in Schritt (vi) eine Temperatur von 50 °C oder mehr, insbesondere eine Temperatur zwischen 50 und 180°C, bevorzugt zwischen 60 und 80°C, auf.

Durch den Einfluss der Temperatur von 50 °C oder mehr reagieren die Carbodiimidgruppen über eine Polyadditionsreaktion unter Bildung von N-Acylharnstoffen mit den Carboxylgruppen. Somit reagieren der Primer, d.h. die abgelüftete Polyurethandispersionszusammensetzung, mit dem abgelüfteten Polyurethandispersionsklebstoff chemisch miteinander. Es bildet sich nach der Erwärmung eine Schicht reagierten Primers **(P)** mit einer Schicht reagierten Klebstoffs **(K).** Es ist dem Fachmann klar, dass je nach Schichtdicken und Verfahren die Reaktion vollständig oder unvollständig sein kann. Weiterhin ist dem Fachmann klar, dass diese Schichten vielfach nicht klar voneinander abgegrenzt sind, da je nach der gewählten Kombination von Zusammensetzung und Klebstoff sowie Verfahrensparameter zum Beispiel durch Migration eine Übergangsschicht gebildet werden kann. Um eine möglichst gute Erhärtung zu erhalten ist es deshalb von Vorteil, wenn zumindest der wässrige Dispersionsklebstoff **(DK),** bzw. der abgelüftete wässrige Dispersionsklebstoff **(DK'),** und gegebenenfalls auch die wässrige Polyurethandispersionszusammensetzung **(PD),** bzw. der Primer, gleichzeitig Carbodiimidgruppen als auch Carboxylgruppen, insbesondere in der Form eines Polyurethanpolymers mit Carboxylgruppen und Carbodiimidgruppen **(PUR-COOH-CDI)** oder in Form eines Polyurethanpolymers mit Carboxylgruppen **(PUR-COOH-CDI)** und eines Carbodiimids **(CDI),** aufweist.

Das Substrat **(S),** vielfach auch als Träger bezeichnet, kann von verschiedener Art und Natur sein. Die Substrate können beispielsweise aus Metall, lackiertem Metall, aus Kunststoff, Holz, Holzwerkstoffen oder Fasermaterialien sein. Das Substrat ist vorzugsweise ein fester, geformter Körper.

Der so gebildete Verbundkörper weist somit mindestens
- eine Kunststofffolie **(KF);**
- einen reagierten Primer **(P),**
- einen reagierten Klebstoff **(K),** sowie
- ein Substrat **(S)**
auf.

Der reagierte Primer wird hierbei erhalten aus einer einkomponentigen wässrigen Polyurethandispersionszusammensetzung **(PD)** und der reagierte Klebstoff wird erhalten aus einem einkomponentigen wässrigen Polyurethandispersionsklebstoff **(DK).** Weiterhin ist der reagierte Primer **(P)** zwischen Kunststofffolie **(KF)** und reagierten Klebstoff **(K)** angeordnet und der reagierte Klebstoff **(K)** ist zwischen reagiertem Primer **(P)** und Substrat **(S)** angeordnet. Die wässrige Polyurethandispersionszusammensetzung **(PD)** weist, wie bereits beschrieben, ein Polyurethan **P1** sowie Carbodiimidgruppen und/oder Carboxylgruppen und der Polyurethandispersionsklebstoff **(DK)** ein Polyurethan **P2** sowie Carbodiimidgruppen und/oder Carboxylgruppen auf.

Die Carboxylgruppen und die Carbodiimidgruppen reagieren hierbei bei Erhitzen auf eine Temperatur von 50°C oder mehr miteinander über eine Polyadditionsreaktion. Damit ist der reagierte Primer **(P)** und reagierte Klebstoff **(K)** durch eine chemische Reaktion direkt miteinander verbunden.

Der so gebildete Verbundkörper ist vorzugsweise ein Artikel der industriellen Fertigung und ist insbesondere ein Artikel für den Innenausbau. Bevorzugt ist er ein Einbauteil in einem Transportmittel oder wird in der Möbelbranche eingesetzt.

Besonders wichtig ist der Einsatz der geprimerten Kunststofffolie für die Herstellung von Innenauskleidungsteilen von Fahrzeugen, insbesondere von Automobilen. Bespiele für derartige Innenauskleidungsteile sind Türseitenteile, Schalttafeln, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen.

Hierfür wird insbesondere ein Vakuumtiefziehverfahren oder eine Presskaschierung im Siegelverfahren verwendet.

Beim Vakuumtiefziehverfahren wird der Dispersionsklebstoff auf das Substrat S, auch als Träger bezeichnet, aufgetragen. Anschliessend erfolgt das Ablüften, bei der vorliegenden Erfindung bei Raumtemperatur oder im Trockenkanal bei vorzugsweise maximal 40°C. Typischerweise wird die Primer-beschichtete Folie (Dekor aus luftundurchlässigem Material) in einem Rahmen luftdicht eingespannt. Unterhalb der Folie befindet sich eine Unterform auf die der Träger gelegt wird. Unterform und Träger sind durchbohrt beziehungsweise luftdurchlässig. Das Gerät ist unterwärts weiter luftdicht abgeschlossen. Beim Absaugen der Luft aus dieser Vorrichtung schmiegt sich nun das Dekormaterial unter dem auf seine Oberfläche lastenden atmosphärischen Druck passgenau auf das Trägerteil. Das Dekormaterial wird vor dem Anlegen des Vakuums, bzw. Unterdruckes, erhitzt. Das Dekormaterial ist wegen des zu erzeugenden Vakuums, bzw. Unterdruckes, luftundurchlässig.

Beim Presskaschierungsverfahren wird der Klebstoff ebenfalls auf dem Träger und gegebenenfalls auf der Primer-beschichteten Kunststofffolie (Dekor) aufgetragen, zumindest jedoch auf dem Träger. Anschliessend erfolgt ein Ablüften, typischerweise bei Raumtemperatur oder im Trockenkanal bei vorzugsweise maximal 40°C. Die Verklebung vom Träger mit dem Dekor erfolgt nach Wärmeaktivierung unter Fügen und Pressen.

Die hier benutzten Primer-beschichteten Kunststofffolien sind vielfach Dekorfolien und weisen eine Oberflächenstruktur auf. Diese Oberflächenstruktur auf der Kunststofffolie kann beispielsweise vor oder während oder nach dem Verkleben eingeprägt werden.

### Kurze Beschreibung der Zeichnungen

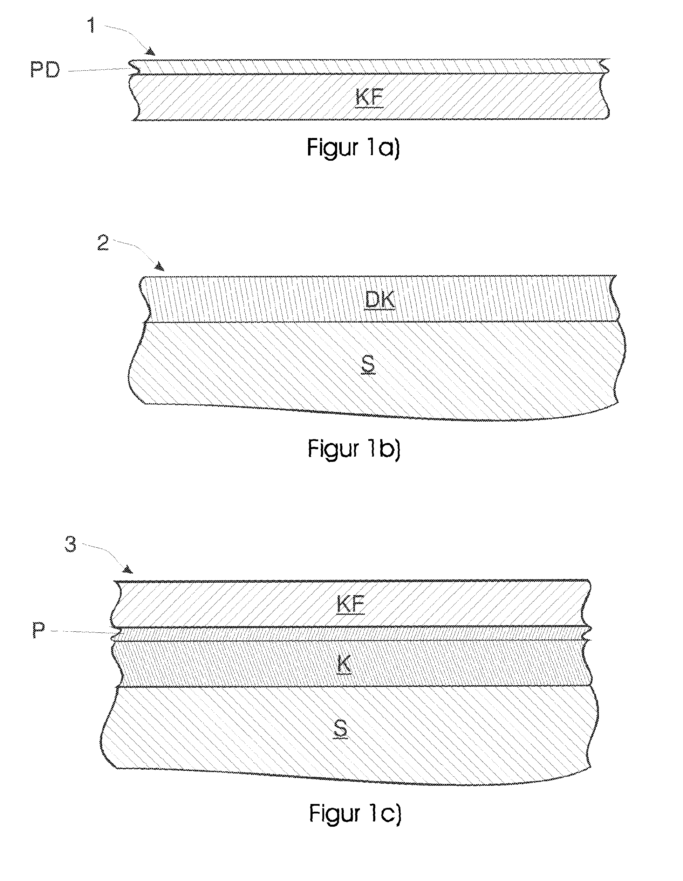

Im Folgenden wird die Erfindung anhand von Zeichnungen schematisch weiter veranschaulicht. Gleiche Elemente sind in den verschiedenen Figuren mit den gleichen Bezugszeichen versehen. Bewegungen mit Pfeilen angegeben. Es zeigen
- Fig. 1: Aufbau eines Verbundkörpers sowie Zwischenstufen
Fig.1a Querschnitt durch eine Kunststofffolie **(KF),** auf die eine einkomponentige wässrige Polyurethandispersionszusammensetzung **(PD)** appliziert wurde
Fig. 1 b Querschnitt durch ein Substrat **(S),** auf welches ein einkomponentiger wässriger Polyurethandispersionsklebstoffes **(DK)** appliziert wurde
Fig. 1 c Querschnitt durch einen Verbundkörper, nach dem Verkleben und Erhitzen
- Fig. 2: Herstellungsverfahren einer Primer-beschichteten Kunststofffolie

In Figur 1 werden mögliche Zwischenstufen bei Herstellung eines Verbundkörpers beschrieben.

Figur 1a zeigt eine Kunststofffolie **(KF),** auf die eine einkomponentige wässrige Polyurethandispersionszusammensetzung **(PD)** appliziert wurde, bevor sie abgelüftet wird. Nach dem Ablüften der einkomponentigen wässrigen Polyurethandispersionszusammensetzung **(PD)** entsteht eine abgelüftete wässrige Polyurethandispersionszusammensetzung **(PD'),** welche als Primer bezeichnet wird.

Figur 1b zeigt ein Substrat **(S),** auf welches ein einkomponentiger wässriger Polyurethandispersionsklebstoffes **(DK)** appliziert wurde, bevor er abgelüftet wird. Nach dem Ablüften des einkomponentigen wässrigen Polyurethandispersionsklebstoffes **(DK)** entsteht ein abgelüfteter wässriger Polyurethandispersionsklebstoff **(DK').**

Die mit Primer beschichtete Kunststofffolie wird anschliessend über den abgelüfteten Klebstoff **(DK')** mit dem Substrat **(S)** gefügt und durch Erhitzen ausgehärtet. Durch die Hitze reagieren Primer und Klebstoff und es entsteht ein Verbundkörper, wie er in Figur 1c) schematisch dargestellt ist, mit einer Kunststofffolie **(KF),** welche über einen reagierten Primer **(P)** und einen reagierten Klebstoff **(K)** mit dem Substrat **(S)** verbunden ist. In der bevorzugten Ausführungsform wird durch die beschichtete Folie vor dem Kontaktieren erhitzt, so dass sie plastifiziert wird und mit dem auf dem Substrat **(S)** befindlichen abgelüfteten Klebstoff **(DK')** unter Druck verklebt wird.

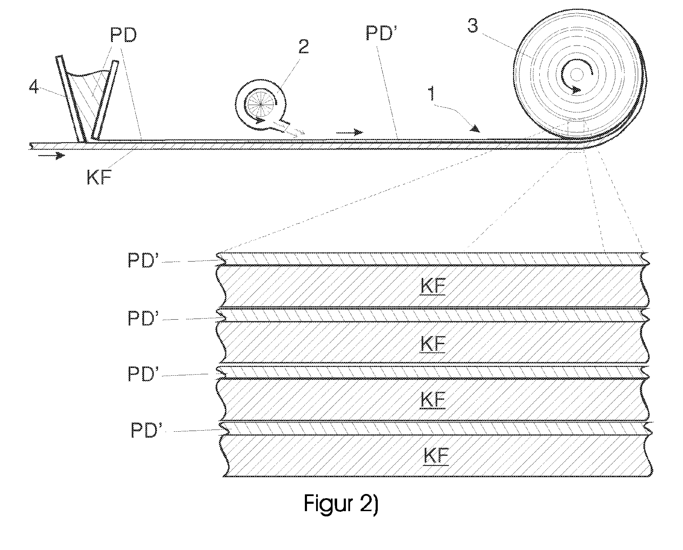

Figur 2 zeigt schematisch die Herstellung einer Primer-beschichteten Kunststofffolie 1. In der hier gezeigten Ausführungsform wird die einkomponentige wässrige Polyurethandispersionszusammensetzung **(PD)** mittels Auftrageinheit 4 auf die Kunststofffolie **(KF)** aufgetragen. Hierbei wird die Kunststofffolie unter der Auftrageeinheit 4 bewegt. Typischerweise wird die Kunststofffolie von einer Rolle (nicht gezeigt) abgewickelt. Anschliessend an den Auftrag wird die wässrige Polyurethandispersionszusammensetzung **(PD)** mittels Ablüftemittel 2 (beispielsweise ein Luftgebläse) abgelüftet. Die derartige abgelüftete wässrige Polyurethandispersionszusammensetzung **(PD)** bildet einen Primer auf der Kunststofffolie. Figur 2 zeigt, dass diese Primer-beschichtete Kunststofffolie aufgerollt wird. Weiterhin ist in Figur 2 im unteren Teil ein vergrösserter schematischer Ausschnitt einer Rolle 3 mit aufgerollter Primer-beschichteter Kunststofffolie gezeigt. Durch das Aufrollen der beschichteten Kunststofffolie sind die einzelnen Lagen der Primer-beschichteten Kunststofffolie 1 in direktem Kontakt miteinander und weisen insbesondere keine Zwischenlagen eines Trennpapiers auf. Die Primer-beschichtete Kunststofffolie kann bei Bedarf ohne Blocken, auch nach längerer Lagerungs- oder Transportzeit von der Rolle 3 abgewickelt werden.

### Beispiele

Die im Folgenden angeführten Beispiele dienen zur Illustration der Erfindung.

### Primer-beschichtete Kunststofffolien

Es wurden die in Tabelle 1 angeführten Primer mittels eines Drahtrakels in einer Schichtstärke von ca. 10µ trocken auf PVC-Folie (Schichtdicke 1.6 mm) aufgetragen und im Trockenschrank unter 50°C (Folientemperatur) abgelüftet.

**Tabelle 1. Eingesetzte Primer.**

| | |
|---|---|
| ***Ref.1*** | Handelsüblicher Polyurethan-Dispersionsprimer |
| ***Ref.2*** | wässriger Polyesterpolyurethan-Dispersionsprimer mit Sulfonatgruppen (Dispercoll U, Bayer AG) (Polymeranteil 40 Gew.-%) |
| ***P1*** | wässrige Dispersion eines Polyesterpolyurethan- Elastomeren mit Carboxyl- und Carbodiimid-gruppen. |
| | |
| | Viskosität = 50 - 300 mPas |
| | Teilchengröße = ca. 0,1 µm |
| | K-Wert nach Fikentscher = ca. 30 - 60 |
| | Filmreissfestigkeit = ca. 30 N/mm² |
| | Filmreissdehnung = ca. 800% |
| | Wassergehalt = ca. 60% |

Die mit dem erfindungsgemässen Primer ***P1*** beschichtete Folie liess sich ohne Zwischenlagen von Trennpapier ohne Auftreten eines Blockens lagern.

### Herstellung des einkomponentigen wässrigen Polyurethandispersionsklebstoffs

Die Herstellung des wässrigen Polyurethandispersionsklebstoffs erfolgte wie folgt:

50g einer wässrigen Dispersion eines Ethylenvinylacetat-Copolmers (EVA) (Ethylen/Vinylacetat = 17% / 83%, Viskosität (Brookfield RVT 3/20 (ISO 2555)) = 3800 ± 1000 mPas, pH = 4 - 5, Wassergehalt: 40 ± 1 %) wurde in einem Rührgefäss vorgelegt. Nach der Einstellung des pHs mittels Zugabe der Natronlauge (0.2g 25-ige NaOH in Wasser) auf einen Wert zwischen 7.5 und 8.5 der pH wurde 50 g einer Polyurethan-Dispersion mit Carboxyl- und Carbodiimidgruppen (Viskosität (23°C, 250s⁻¹ nach DIN ISO 976)= 50 - 300 mPas, Teilchengrösse = ca. 0.1 µm, k-Wert nach Fikentscher = ca. 30-60, Film-Reissfestigkeit = ca. 30 N/mm², Film-Reissdehnung = ca. 800 %, Wassergehalt: 60%) eingerührt. Anschliessend wurde 5 g eines Oligocarbodiimids (Carbodiimid-Gehalt (rel.zu Polymer) = ca.12%, ca.3 mol/kg, Viskosität (23°C, 250s⁻¹ nach DIN EN ISO 3219) = 10 - 500 mPas, pH = 8 - 10, Wassergehalt: 80 %) eingerührt. Nach weiterem Rühren während circa 20 Minuten wurde die Viskosität des Dispersionsklebstoffes mittels 0.2 g Verdicker (Borchi® Gel L 75 N, Borchers GmbH) auf eine Viskosität zwischen 5000 und 6000 mPas eingestellt. Die Viskosität wird hierbei bei 20°C mittels eines Brookfield-Viskosimeter RVT mit Spindel 3/5 UpM gemessen. Der Dispersionsklebstoff weist einen Wasseranteil von circa 50 Gew.-% auf.

### Verbundkörper-Herstellung

Der oben beschriebene wässrige Polyurethandispersionsklebstoff wurde auf eine PVC-Folie (Schichtdicke 1.6 mm) in einer Nassschichtstärke von ca. 150µm aufgetragen und bei Raumtemperatur abgelüftet und im Heisssiegelverfahren (Siegeltemperatur 70°C) mit den Primer-beschichteten Kunststofffolien verklebt.

Die Verklebung erfolgte mit einer beheizten Plattenpresse (100°C Plattentemperatur) innerhalb von 15 Sekunden, so dass in der Klebefuge eine Temperatur von 70°C realisiert wurde.

### Prüfmethoden

### - Wärmebeständigkeit im Schälstandversuch (Doppelbestimmung)

Hierzu wurden die Prüfkörper mit einer Breite von 2,5 cm im Wärmeschrank und einem Gewicht von 300g belastet.

Die Prüfkörper wurden im vorgeheizten Ofen beginnend mit einer Temperatur von 80°C für eine Stunde belassen, danach und nach jeder weiteren Stunde wurde die Temperatur im Ofen um weitere 10°C erhöht.

Unter dieser Belastung öffnet sich die Klebefuge zeit- und temperaturabhängig. Die Streckenöffnung ("d_{L}") der verklebten Fuge wurde gemessen und als d_{L}(80°C), d_{L}(90°C), d_{L}(100°C), d_{L}(110°C) und d_{L}(120°C) angegeben. Falls ein Bruch erfolgte, wurde die Zeit hierfür gemessen. Die Streckenöffnung beziehungsweise die Zeit, gibt Auskunft über die Verklebungsgüte.

### -Beständigkeit im Klimawechseltest (Doppelbestimmung)

Die Prüfkörperherstellung war analog denen der Wärmebeständigkeitsprüfung. Die Prüfung selbst erfolgte nach dem BMW-3.08-Test ebenfalls mit 300g Belastung. Hierfür ist folgendes Testprofil vorgegeben:
4 h Lagerung bei 90°C (80% rel. Luftfeuchtigkeit)
2 h Abkühlung auf -30°C (80% rel. Luftfeuchtigkeit)
4 h Lagerung bei -30°C (80% rel. Luftfeuchtigkeit)
2h Aufheizen auf 90°C (80% rel. Luftfeuchtigkeit)

Nach dem Durchlaufen eines Testzyklus wurde die Öffnungsstrecke ("d_{B}") gemessen. Diese Strecke gibt auch hier Auskunft über die Beständigkeit im Verbund nach Klimawechselbeanspruchung.

Resultate: Die Ergebnisse sind in Tabellen 2 und 3 zusammengestellt.

**Tabelle 2. Wärmebeständigkeit von Verbundkörper aus Primer-beschichteten Kunststofffolien. Die angegebenen Zahlen beziehen sich jeweils auf die erste bzw. die zweite Messung.**

| für Beschichtung verwendeter Primer | ***Ref.1*** | ***Ref.2*** | ***P1*** |
|---|---|---|---|
| d_{L}(80°C) [mm] | 9/20 | 15/11 | 1/0 |
| d_{L}(90°C) [mm] | 30/75 | 95/87 | 2/2 |
| d_{L}(100°C) [mm] | Bruch:20min./ 9min. | Bruch: 3min. /7 min. | 5/6 |
| d_{L}(110°C) [mm] | | | 9/11 |
| d_{L}(120°C) [mm] | | | 15/19 |

**Tabelle 3. Beständigkeit im Klimawechseltest von Verbundkörper aus Primer-beschichteten Kunststofffolien. Die angegebenen Zahlen beziehen sich jeweils auf die erste bzw. die zweite Messung.**

| für Beschichtung verwendeter Primer | ***Ref.1*** | ***Ref.2*** | ***P1*** |
|---|---|---|---|
| d_{B} [mm] | Bruch | Bruch | 28/32 |

Die Ergebnisse zeigen deutlich die Vorteile der Erfindung, indem die Verbundkörper massiv besseres Verhalten in Bezug auf die Wärmebeständigkeit und Klimawechselbeständigkeit aufweisen.

### Bezugszeichenliste

- 1: Primer-beschichtete Kunststofffolie
- 2: Ablüftemittel
- 3: Rolle mit aufgerollter Primer-beschichteter Kunststofffolie
- 4: Auftragseinheit
- KF: Kunststofffolie
- PD: Polyurethandispersionszusammensetzung
- PD': abgelüftete Polyurethandispersionszusammensetzung
- DK: wässriger Polyurethandispersionsklebstoff
- DK': abgelüfteter wässrige Polyurethandispersionsklebstoff
- P: reagierter Primer
- K: reagierter Klebstoff

## Patentansprüche

1. Verwendung einer einkomponentigen wässriger Polyurethandispersionszusammensetzung **(PD)** als Primer für das Verkleben von Kunststofffolien **(KF)** mittels eines wässrigen einkomponentigen Polyurethandispersionsklebstoffes **(DK);**
wobei die wässrige Polyurethandispersionszusammensetzung **(PD)** ein Polyurethan **P1** sowie Carbodiimidgruppen und/oder Carboxylgruppen aufweist;
und
wobei der Polyurethandispersionsklebstoff **(DK)** ein Polyurethan **P2** sowie Carbodiimidgruppen und/oder Carboxylgruppen aufweist;
so dass die wässrige Polyurethandispersionszusammensetzung **(PD)** und der wässrige Polyurethandispersionsklebstoff **(DK)** beim Erhitzen auf eine Temperatur von 50°C oder mehr miteinander über eine Polyadditionsreaktion reagieren.

2. Verwendung gemäss Anspruch 1, **dadurch gekennzeichnet, dass** die Carbodiimidgruppe die Formel (I) aufweist

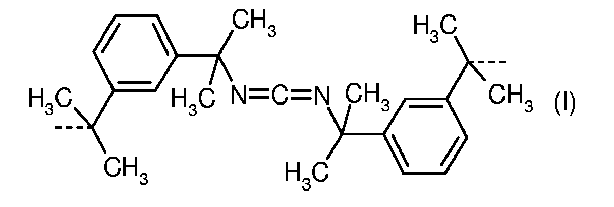

3. Verwendung gemäss Anspruch 1 oder 2, **dadurch gekennzeichnet, dass** die Polyurethandispersionszusammensetzung **(PD)** Carbodiimidgruppen aufweist, welche im Polyurethan **P1** eingebunden vorhanden sind.

4. Verwendung gemäss einem der vorhergehenden Ansprüche, **dadurch gekennzeichnet, dass** die Polyurethandispersionszusammensetzung **(PD)** Carboxylgruppen aufweist und welche ans Polyurethan **P1** gebunden sind.

5. Verwendung gemäss einem der vorhergehenden Ansprüche, **dadurch gekennzeichnet, dass** das im wässrigen Polyurethandispersionsklebstoff **(DK)** vorhandene Polyurethan **P2** ein Polyurethan **(PUR-COOH-CDI)** ist, welches sowohl Carboxylgruppen als auch Carbodiimidgruppen aufweist.

6. Verwendung gemäss einem der Ansprüche 1 bis 4, **dadurch gekennzeichnet, dass** der wässrige Polyurethandispersionsklebstoff (DK) als Polyurethan **P2** ein Polyurethan **(PUR-COOH)** umfasst, welches Carboxylgruppen aufweist und
weiterhin mindestens ein Carbodiimid **(CDI),** welches mindestens eine Carbodiimidgruppe aufweist, umfasst.

7. Verwendung gemäss Anspruch 5 oder 6, **dadurch gekennzeichnet, dass** die wässrige Polyurethandispersionszusammensetzung **(PD)** mindestens ein Carbodiimid **(CDI),** welches mindestens eine Carbodiimidgruppe aufweist, enthält.

8. Primer-beschichtete Kunststofffolie, welche erhalten wird durch das Applizieren und Ablüften einer einkomponentigen wässrigen Polyurethandispersionszusammensetzung **(PD)** auf eine Kunststofffolie **(KF),** wobei die Polyurethandispersionszusammensetzung **(PD)** mindestens ein Polyurethan **P1** sowie Carbodiimidgruppen und/oder Carboxylgruppen aufweist.

9. Primer-beschichtete Kunststofffolie gemäss Anspruch 8, **dadurch gekennzeichnet, dass** die Carbodiimidgruppe die Formel (I) aufweist

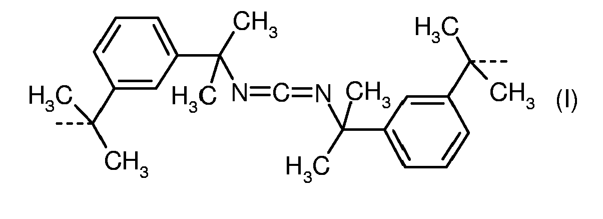

10. Verbundkörper aufweisend
- eine Kunststofffolie **(KF);**
- einen reagierten Primer **(P),**
erhalten aus einer einkomponentigen wässrigen Polyurethandispersionszusammensetzung **(PD);**
- einen reagierten Klebstoff **(K),**
erhalten aus einem einkomponentigen wässrigen Polyurethandispersionsklebstoff **(DK);** sowie
- ein Substrat **(S);**
wobei der reagierte Primer **(P)** zwischen Kunststofffolie **(KF)** und reagierten Klebstoff **(K)** angeordnet ist und der reagierte Klebstoff **(K)** zwischen reagiertem Primer **(P)** und Substrat **(S)** angeordnet ist; und wobei die wässrige Polyurethandispersionszusammensetzung **(PD)** ein Polyurethan **P1** sowie Carbodiimidgruppen und/oder Carboxylgruppen aufweist;
und wobei der Polyurethandispersionsklebstoff **(DK)** ein Polyurethan **P2** sowie Carbodiimidgruppen und/oder Carboxylgruppen aufweist;
so dass Carboxylgruppen und die Carbodiimidgruppen beim Erhitzen auf eine Temperatur von 50°C oder mehr miteinander über eine Polyadditionsreaktion reagieren.

11. Verbundkörper gemäss Anspruch 10, **dadurch gekennzeichnet, dass** der Verbundkörper ein Artikel der industriellen Fertigung ist und insbesondere ein Artikel für den Innenausbau ist, bevorzugt ein Einbauteil in einem Transportmittel ist oder in der Möbelbranche eingesetzt wird.

12. Verfahren zur Herstellung eines Verbundwerkstoffs gemäss Anspruch 10 oder 11 umfassend die Schritte
(i) Applizieren der wässrigen Polyurethandispersionszusammensetzung **(PD)** auf eine Kunststofffolie **(KF)**
(ii) Ablüften der Polyurethandispersionszusammensetzung **(PD)** unter Bildung einer abgelüfteten Polyurethandispersionszusammensetzung **(PD')**
(iii) Applizieren des wässrigen Polyurethandispersionsklebstoffes **(DK)** auf das Substrat (**S)**
(iv) Ablüften des wässrigen Polyurethandispersionsklebstoffes **(DK)** unter Bildung eines abgelüfteten Polyurethandispersionsklebstoffes **(DK')**
(v) Erwärmen der Kunststofffolie **(KF)** mit der darauf abgelüfteten Polyurethandispersionszusammensetzung **(PD')**
(vi) Kontaktieren des abgelüfteten Polyurethandispersionsklebstoffes **(DK')** mit der nach (ii) abgelüfteten Polyurethandispersionszusammensetzung **(PD')**
wobei die Schritte (iv) und (v) nacheinander oder gleichzeitig erfolgen können,
und wobei die wässrige Polyurethandispersionszusammensetzung **(PD)** und der wässrige Polyurethandispersionsklebstoff **(DK)** wie beschrieben in Verwendung gemäss einem der Ansprüche 1 bis 7 ausgewählt sind.

13. Verfahren gemäss Anspruch 10, **dadurch gekennzeichnet, dass** der Schritt des Kontaktierens unter einem Anpressdruck, insbesondere zwischen 0.1 bar und 1 bar, bevorzugt mindestens 0.8 bar, erfolgt.

14. Verfahren gemäss Anspruch 13, **dadurch gekennzeichnet, dass** der Anpressdruck durch das Anlegen eines Unterdruckes im Raum zwischen abgelüftetem Polyurethandispersionsklebstoffes **(DK')** und abgelüfteter Polyurethandispersionszusammensetzung **(PD')** erzeugt wird.

15. Verfahren gemäss einem der Ansprüche 12 bis 14, **dadurch gekennzeichnet, dass** der abgelüftete Polyurethandispersionsklebstoffes **(DK')** beim Kontaktieren in Schritt (vi) eine Temperatur von 50°C oder mehr, insbesondere eine Temperatur zwischen 50 und 180°C, bevorzugt zwischen 60 und 80°C, aufweist.

16. Verfahren gemäss einem der Ansprüche 12 bis 15, **dadurch gekennzeichnet, dass** der abgelüftete Polyurethandispersionsklebstoff **(DK')** und die abgelüftete Polyurethandispersionszusammensetzung **(PD')** unter dem Einfluss von Temperatur mit einander chemisch reagieren.
